# EUROPÄISCHE PATENTSCHRIFT

(11) **EP 3 321 519 B1**
(45) Veröffentlichungstag und Bekanntmachung des Hinweises auf die Patenterteilung: **03.03.2021**
(21) Anmeldenummer: 17198556.7
(22) Anmeldetag: 26.10.2017
(51) Int. Cl.: F16B 5/02, F16B 29/00, F16B 2/04

(54) **EINRICHTUNG ZUM VERBINDEN ZWEIER BAUTEILE**
DEVICE FOR CONNECTING TWO COMPONENTS
DISPOSITIF DE RACCORDEMENT DE DEUX COMPOSANTS

(30) Priorität: 11.11.2016 DE 102016222181
(43) Veröffentlichungstag der Anmeldung: 16.05.2018
(73) Patentinhaber: Valeo Siemens eAutomotive Germany GmbH, 91056 Erlangen (DE)
(72) Erfinder: Keßler, Bernhard, 97705 Burkardroth (DE)
(74) Vertreter: Dr. Gassner & Partner mbB

(56) Entgegenhaltungen:
- EP-A2- 0 125 683
- WO-A1-2013/138533
- DE-A1- 3 605 987
- DE-C1- 4 302 007
- DE-U1-202012 009 609
- GB-A- 1 086 382
- JP-U- H0 562 716
- US-A1- 2013 156 525
- US-A1- 2014 308 088

## Beschreibung

Die Erfindung betrifft eine Einrichtung zum Verbinden zweier Bauteile, welche ein auf einem Schaft einer Schraube axial verschiebbar geführtes Spannelement mit einer äußeren Kegelfläche und einem radial aufweitbaren Klemmring mit einer inneren Kegelfläche umfasst. Das Spannelement ist derart in den Klemmring eingesetzt, dass die äußere Kegelfläche des Spannelements an der inneren Kegelfläche des Klemmrings anliegt, mit den Merkmalen des Oberbegriffs des Anspruchs 1.

Das Dokument DE 36 05 987 A offenbart eine Vorrichtung zum Befestigen einer Platte mittels einer Schraube an einer weiteren Komponente, indem eine konische Buchse und ein Klemmring verwendet werden.

In der EP 0 125 683 A wird eine zweiteilige Befestigungsvorrichtung vorgeschlagen, deren Komponenten Kegelflächen aufweisen.

Die US 2014/308088 A schlägt eine Befestigungsvorrichtung vor, bei der zwei konusförmige Rohrabschnitte gegeneinander verspannt werden, wodurch eine radiale Kraft erzeugt wird.

In der DE 20 2012 009609 U wird eine mit einer Verdrehsicherung versehene Spannhülse vorgeschlagen.

In dem Dokument GB 1 086 382 A wird ein elektrisch isolierendes Befestigungselement beschrieben, das zwei konische Hülsen aufweist.

Das Dokument JP H05 62716 U schlägt eine Befestigungsvorrichtung mit zwei konischen Hülsen vor, wobei die innere Hülse mit dem Gewinde einer Schraube in Eingriff ist.

Bei der Montage von Baugruppen liegt oftmals aufgrund der vorgegebenen Anzahl von Befestigungspunkten eine Überbestimmtheit vor, welche einen Toleranzausgleich erforderlich macht, um zu starke Verspannungen zu vermeiden. Dieses Problem besteht umso mehr, je genauer die beiden zu verbindenden Bauteile zueinander fixiert werden müssen.

Im Bereich der Kraftfahrzeugtechnik ist es beispielsweise bekannt, Komponenten des Antriebsstrangs passgenau zueinander zu fixieren. Insbesondere bei der Befestigung eines elektrischen Motors an einem Getriebegehäuse sind die örtlich einzuhaltenden Toleranzen sehr gering, wenn ein direkter Zahnradeingriff zwischen einem Zahnrad einer Motorwelle und einem Zahnrad des Getriebes erfolgen soll. In solchen Fällen entstehen an den von den ineinander eingreifenden Zahnrädern weiter entfernten Befestigungspunkten oftmals große Toleranzen, die beispielsweise mit Hilfe von Unterlegscheiben ausgeglichen werden müssen, um Achsschiefstellungen und/oder zu starke Verspannungen zu vermeiden.

Ein derartiges Vorgehen ist allerdings aufwändig. DE 43 02 007 C1 schlägt daher eine Einrichtung zum Verbinden eines Motorblocks mit einem Getriebeblock vor, welche eine spannungsfreie Montage mit Toleranzausgleich bei einfacher Handhabbarkeit ermöglichen soll. Die Einrichtung ist relativ komplex und umfasst eine große Anzahl von Einzelteilen, unter anderem ist ein Spannelement vorgesehen, welches die Form eines Doppelkonus hat und auf einem Schaft einer Schraube axial beweglich geführt ist. Zur Verbindung des Motorblocks mit dem Getriebeblock greift eine der konusförmigen Flächen des Spannelements in eine ebenfalls konusförmig ausgebildete Aussparung in einem der zu befestigenden Bauteile ein. Wird die Schraube weiter in das Bauteil eingedreht, so spreizt eine weitere konusförmige Fläche des Spannelements einen um das Spannelement angeordneten Klemmring, so dass eine radiale Verspannung ermöglicht wird.

Ausgehend von diesem Stand der Technik ist Aufgabe der vorliegenden Erfindung, eine Einrichtung zum Verbinden zweier Bauteile anzugeben, die einen flexiblen Ausgleich von Toleranzen ermöglicht.

Gemäß der Erfindung wird diese Aufgabe gelöst durch eine Einrichtung zum Verbinden zweier Bauteile mit den Merkmalen des Patentanspruchs 1.

Vorteilhafte Ausgestaltungen der Erfindung sind Gegenstand der Unteransprüche.

Die erfindungsgemäße Einrichtung zum Verbinden zweier Bauteile umfasst eine Schraube und ein auf einem Schaft der Schraube axial verschiebbar geführtes Spannelement mit einer äußeren Kegelfläche und einem radial aufweitbaren, eine innere Kegelfläche aufweisenden Klemmring. Das Spannelement ist derart in den Klemmring eingesetzt, dass die äußere Kegelfläche des Spannelements an der inneren Kegelfläche des Klemmrings anliegt. Gemäß der Erfindung weist der Klemmring eine ringförmige Auflagefläche auf, welche beim Eindrehen der Schraube in ein zu verbindendes Bauteil auf diesem aufliegt, so dass eine axiale Kraft zumindest zum Teil über die aneinander anliegenden inneren und äußeren Kegelflächen in radialer Richtung vermittelbar ist. Der Klemmring ist am Spannelement mittels einer Rastverbindung fixierbar.

Die Einrichtung gemäß der Erfindung besteht i neben der Schraube m Wesentlichen lediglich aus zwei Teilen, nämlich dem Spannelement und dem das Spannelement umfänglich umgreifenden Klemmring. Diese Bauteile sind vor bzw. während der Montage am Befestigungspunkt insbesondere eines Motorgehäuses angebracht, um Toleranzen in axialer und radialer Richtung auszugleichen. Der äußere Klemmring kann insbesondere geschlitzt ausgeführt sein, so dass dieser in radialer Richtung expandierbar ist. Wird nun die Schraube eingedreht, so verschiebt sich zunächst das Spannelement zusammen mit dem Klemmring, bis letzterer mit seiner Auflagefläche in Anlage zu dem zu befestigenden Bauteil, insbesondere zu einem Getriebegehäuse, steht. Daraufhin wird durch die von der Schraube vermittelten Spannkraft das innere Spannelement axial in den Klemmring gedrückt, welcher sich dadurch aufweitet und so einen in radialer Richtung wirksamen Kraftschluss am Befestigungspunkt erzeugt. Die axiale Lage der zu befestigenden Bauteile ist somit im Wesentlichen von der Anordnung des Klemmrings relativ zu dem Spannelement vor dem Verschrauben vorgegeben, so dass die axiale Toleranz durch die Einrichtung vollständig ausgeglichen werden kann. Dies ist insbesondere bei überbestimmten Befestigungskonzepten von Vorteil.

Besonders bevorzugt dient die Einrichtung zur Befestigung von Traktionsmotoren an einem Getriebegehäuse, wobei ein direkter Zahnradeingriff von dem Motor zu dem Getriebe vorgesehen ist.

Der Klemmring ist am Spannelement mittels einer Rastverbindung fixierbar, so dass diese Komponenten der Einrichtung am Bauteil verliersicher vormontiert werden können. Die Rastverbindung ist beispielsweise von einer Rastnase gebildet, die in eine komplementär geformte Aussparung eingreift. Die Rastnase ist dabei besonders bevorzugt einstückig mit dem Klemmring oder dem Spannelement verbunden, wobei die komplementär ausgeformte Aussparung in der jeweils gegenüberliegenden Komponente eingebracht ist.

Vorzugsweise ist der Schaft im Spannelement mit radialem Spiel geführt. Auf diese Weise lassen sich mittels der Einrichtung neben axialen Toleranzen auch radiale Toleranzen ausgleichen.

In einem bevorzugten Ausführungsbeispiel ist ein Federelement zwischen einem Schraubenkopf der Schraube und einer stirnseitigen Fläche des Spannelements angeordnet. Das Federelement ist beispielsweise als Schraubenfeder oder als Tellerfeder ausgebildet und dient zur Vermeidung oder zumindest zur Verringerung von Setzeffekten der Schraubverbindung.

In Weiterbildung der Erfindung ist vorgesehen, den Klemmring an seinem Außenumfang mit einer Strukturierung zur Ausbildung eines Formschlusses mit einem der zu verbindenden Bauteile zu versehen.

Die formschlüssige Strukturierung umfasst besonders bevorzugt mehrere Rippen oder Rillen, die in eine entsprechend komplementär ausgeformte Strukturierung des zu verbindenden Bauteils eingreifen. Die komplementäre Strukturierung ist weiter bevorzugt in einer Buchse des zu verbindenden Bauteils eingebracht. Die komplementären Strukturen der Buchse bzw. des in die Buchse eingesetzten Klemmrings stellen beim Verbinden der Bauteile einen Formschluss her, der den in radialer Richtung wirkenden Kraftschluss komplementiert, so dass eine mechanisch stabile Befestigung sichergestellt wird.

In einem möglichen Ausführungsbeispiel der Erfindung umfasst die formschlüssige Struktur mehrere Rippen, die in entsprechend komplementär ausgeformte Rillen eingreifen. Die Rippen bzw. die Rillen erstrecken sich beispielsweise in axialer Richtung oder in Umfangsrichtung über die innere und/oder äußere Kegelfläche.

Besonders bevorzugt weist der Klemmring einen axialen Schlitz auf, der die Fähigkeit des Klemmrings, in radialer Richtung expandierbar oder aufweitbar ausgebildet zu sein auf besonders einfache Art und Weise bereitstellt.

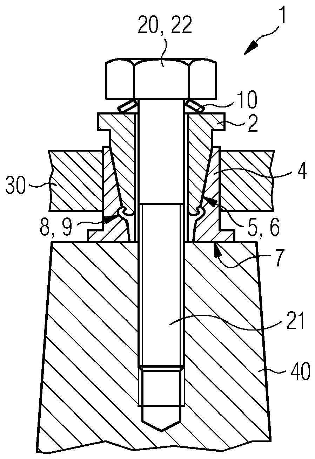

Für eine weitere Beschreibung der Erfindung wird auf das in der Zeichnung gezeigte Ausführungsbeispiel verwiesen.

Die einzige Zeichnung zeigt in einer schematischen Darstellung eine Einrichtung zum Verbinden zweier Bauteile gemäß einem möglichen Ausführungsbeispiel der Erfindung in einer schematischen Schnittdarstellung.

Die Zeichnung zeigt eine Einrichtung 1 zum Verbinden zweier Bauteile. Die Einrichtung 1 ist insbesondere dazu ausgebildet, ein Motorengehäuse an einem Getriebegehäuse mit Toleranzausgleich in radialer und axialer Richtung zu befestigen.

Die Einrichtung 1 umfasst ein inneres Spannelement 2 mit einer zentralen Bohrung, in der ein Schaft 21 einer Schraube 20 einzusetzen ist. Umfänglich um das Spannelement ist ein Klemmring 4 mit einem nicht näher dargestellten axialen Schlitz angeordnet, welcher dem Klemmring 4 die Fähigkeit verleiht sich in radialer Richtung aufzuweiten. Der Klemmring 4 hat eine innere Kegelfläche 5, die einer äußeren Kegelfläche 6 des Spannelements 2 gegenüberliegend angeordnet ist. Der Klemmring 4 ist in einer Bohrung eines ersten Bauteils 30 eingesetzt und liegt an diesem in radialer Richtung an. Der Klemmring 4 ist ferner mit einer ringförmigen Auflagefläche 7 versehen, die auf dem zu verbindenden zweiten Bauteil 40 plan aufliegt.

Der Klemmring 4 und das Spannelement 2 können vor der eigentlichen Montage verliersicher am ersten Bauteil 30 fixiert werden. Hierzu ist der Klemmring 4 in die Bohrung des ersten Bauteils 20 einzusetzen. Eine Rastverbindung, die von den Rastnasen 8 gebildet wird, welche von der äußeren Kegelfläche 6 des Spannelements 2 radial in Aussparungen 9 des Klemmrings 4 hervorstehen, stellt die temporäre Befestigung des Spannelements 2 am Klemmring 4 vor der Montage sicher.

Zur Verbindung des ersten und des zweiten Bauelements 30, 40 ist die Schraube 20 derart in eine zentrale Bohrung des Spannelements 2 einzusetzen, dass der Schaft 21 durch die Einrichtung 1 hindurchgeführt ist und ein Gewinde der Schraube 20 in das Bauteil 40 eingreifen kann. Die zentrale Bohrung des Spannelements 2 ist dabei mit Spiel versehen, d. h. die zentrale Bohrung des Spannelements 2 weist einen Durchmesser auf, der etwas größer ist, als er zur Aufnahme des Schafts 21 nötig wäre. Hierdurch wird sichergestellt, dass durch die Einrichtung 1 neben axialen Toleranzen auch radiale Toleranzen ausgeglichen werden können.

Zwischen einem Schraubenkopf 22 der Schraube 20 und dem Spannelement 2 ist ferner ein als Tellerfeder ausgebildetes Federelement 10 angeordnet, welches Setzeffekte der Schraubverbindung vermeiden soll.

Beim Eindrehen der Schraube 2 in das Bauteil 40 wird über die Auflagefläche 7 und das Federelement 10 eine axiale Kraft vermittelt, welche das Spannelement 2 in den Klemmring 4 hineindrückt. Der Klemmring 4 expandiert dadurch, so dass ein radialer Kraftschluss am Befestigungspunkt erzeugt wird.

Obwohl die Erfindung im Detail mit Bezug auf das bevorzugte Ausführungsbeispiel näher illustriert und beschrieben wurde, so ist die Erfindung nicht hierdurch eingeschränkt. Andere Variationen und Kombinationen können vom Fachmann hieraus abgeleitet werden, ohne von dem Gegenstand der Ansprüche, der Erfindung abzuweichen.

## Patentansprüche

1. Einrichtung (1) zum Verbinden zweier Bauteile (30, 40), umfassend eine Schraube (20) und ein auf einem Schaft (21) der Schraube (20) axial verschiebbar geführtes Spannelement (2) mit einer äußeren Kegelfläche (6) und einem radial aufweitbaren, eine innere Kegelfläche (5) aufweisenden Klemmring (4), wobei das Spannelement (2) derart in dem Klemmring (4) eingesetzt ist, dass die äußere Kegelfläche (6) des Spannelements (2) an der inneren Kegelfläche (5) des Klemmrings (4) anliegt, wobei der Klemmring (4) eine ringförmige Auflagefläche (7) aufweist, welche beim Eindrehen der Schraube (20) in ein zu verbindendes Bauteil (40) auf diesem aufliegt, so dass eine axiale Kraft zumindest zum Teil über die aneinander anliegenden inneren und äußeren Kegelflächen (5, 6) in radialer Richtung vermittelbar ist; **dadurch gekennzeichnet, dass** der Klemmring (4) am Spannelement (2) mittels einer Rastverbindung (8, 9) fixierbar ist.

2. Einrichtung (1) nach Anspruch 1, **dadurch gekennzeichnet, dass** der Schaft (21) im Spannelement (2) mit radialem Spiel geführt ist.

3. Einrichtung (1) nach einem der vorhergehenden Ansprüche,
**dadurch gekennzeichnet, dass** ein Federelement (10) zwischen einem Schraubenkopf (22) der Schraube (20) und einer stirnseitigen Fläche des Spannelements (2) angeordnet ist.

4. Einrichtung (1) nach einem der vorhergehenden Ansprüche,
**dadurch gekennzeichnet, dass** der Klemmring (4) an seinem Außenumfang mit einer Strukturierung zur Ausbildung eines Formschlusses mit einem der zu verbindenden Bauteile (30) versehen ist.

5. Einrichtung (1) nach Anspruch 4,
**dadurch gekennzeichnet, dass** die Strukturierung mehrere Rippen oder Rillen umfasst, um in eine entsprechend komplementär ausgeformte Strukturierung des zu verbindenden Bauteils (30), insbesondere einer Buchse des zu verbindenden Bauteils (30) einzugreifen.

6. Einrichtung (1) nach einem der vorhergehenden Ansprüche,
**dadurch gekennzeichnet, dass** der Klemmring (4) einen axialen Schlitz aufweist.

## Claims

1. Device (1) for connecting two components (30, 40), comprising a screw (20) and a clamping element (2) guided axially displaceably on a shank (21) of said screw (20) and having an outer conical surface (6) and a radially expandable clamping ring (4) having an inner conical surface (5), the clamping element (2) being inserted in the clamping ring (4) in such a way, in that the outer conical surface (6) of the clamping element (2) bears against the inner conical surface (5) of the clamping ring (4), the clamping ring (4) having an annular bearing surface (7) which, when the screw (20) is screwed into a component (40) to be connected, bears on the latter, so that an axial force can be transmitted in the radial direction at least partially via the inner and outer conical surfaces (5, 6) bearing against one another; **characterized in that** the clamping ring (4) can be fixed to the clamping element (2) by means of a snap-in connection (8, 9).

2. Device (1) according to claim 1,
**characterized in that** the shank (21) is guided in the clamping element (2) with radial play.

3. Device (1) according to one of the preceding claims,
**characterized in that** a spring element (10) is arranged between a screw head (22) of the screw (20) and an end face of the clamping element (2).

4. Device (1) according to one of the preceding claims,
**characterised in that** the clamping ring (4) is provided on its outer circumference with a structuring for forming a positive fit with one of the components (30) to be connected.

5. Device (1) according to claim 4,
**characterized in that** the structuring comprises a plurality of ribs or grooves in order to engage in a correspondingly complementarily shaped structuring of the component (30) to be connected, in particular a bushing of the component (30) to be connected.

6. Device (1) according to one of the preceding claims,
**characterized in that** the clamping ring (4) has an axial slot.

## Revendications

1. Dispositif (1) de raccordement de deux composants (30, 40) comprenant une vis (20) et un élément de serrage (2) pouvant être déplacé axialement sur une tige (21) de la vis (20) ayant une surface conique extérieure (6) et une bague de serrage (4) présentant une surface conique intérieure (5) pouvant s'élargir radialement, en ce que l'élément de serrage (2) est inséré dans la bague de serrage (4) de telle sorte que la surface conique extérieure (6) de l'élément de serrage (2) est appliquée au niveau de la surface conique intérieure (5) de la bague de serrage (4), en ce que la bague de serrage (4) présente une surface d'appui annulaire (7) qui, en vissant la vis (20) dans un composant (40) qui doit être raccordé, repose sur celui-ci de telle sorte qu'une force axiale peut être transmise au moins partiellement dans le sens axial par les surfaces coniques (5, 6) intérieures et extérieures adjacentes ;
**caractérisé en ce que** la bague de serrage (4) peut être fixée au niveau de l'élément de serrage (2) au moyen d'un raccordement par encliquetage (8, 9).

2. Dispositif (1) selon la revendication 1, **caractérisé en ce que** la tige (21) est guidée dans l'élément de serrage (2) avec un jeu radial.

3. Dispositif (1) selon l'une des revendications précédentes, **caractérisé en ce qu'**un élément à ressort (10) est disposé entre une tête de vis (22) de la vis (20) et une surface frontale de l'élément de serrage (2).

4. Dispositif (1) selon l'une des revendications précédentes, **caractérisé en ce que** la bague de serrage (4) comporte au niveau de sa circonférence extérieure une structuration permettant la réalisation d'une liaison mécanique avec l'un des composants qui doit être raccordé (30).

5. Dispositif (1) selon la revendication 4, **caractérisé en ce que** la structuration comporte plusieurs nervures ou rainures afin de s'engrener dans une structuration correspondant formée de manière complémentaire du composant (30) qui doit être raccordé, en particulier dans une douille du composant (30) qui doit être raccordé.

6. Dispositif (1) selon l'une des revendications précédentes, **caractérisé en ce que** la bague de serrage (4) présente une fente axiale.
